# EUROPEAN PATENT SPECIFICATION

(11) **EP 2 441 631 B1**
(45) Date of publication and mention of the grant of the patent: **29.11.2017**
(21) Application number: 11007470.5
(22) Date of filing: 14.09.2011
(51) Int. Cl.: B60T 11/22, B60T 11/224, B62L 3/02

(54) **Pump body for governing hydraulic actuators of disk brakes for bicycles and motorcycles**
Pumpenkörper zum Steuern von hydraulischen Aktuatoren von Scheibenbremsen für Fahrräder und Motorräder
Corps de pompe pour diriger les actionneurs hydrauliques de freins à disque pour bicyclettes et motocyclettes

(30) Priority: 16.09.2010 IT FI20100192
(43) Date of publication of application: 18.04.2012
(73) Proprietor: FORMULA S.A.S. DI "FORMULA GROUP S.R.L." & C., 59100 Prato (PO) (IT)
(72) Inventor: Becocci, Andrea, 59100 Prato (IT); Fiesoli, Marco, 50013 Campi Bisenzio (Firenze) (IT)
(74) Representative: Nesti, Antonio

(56) References cited:
- EP-A1- 0 368 120
- GB-A- 424 676
- US-A- 2 041 164

## Description

### Field of the invention

The invention relates to a pump body for governing hydraulic disk brakes for bicycles or motorcycles.

### State of the Art

As is known, pump bodies comprise a piston comprising a main compression gasket mounted on a stem, which is mobile within a cylinder that communicates with a tank for working fluid, generally oil.

The piston is in turn driven by the displacement of a control lever connected to the stem via a thrust rod and passes from a resting position to a position of braking against the action of a return spring.

As it slides within the cylinder, the piston displaces a volume of working fluid present in the cylinder, which is thus compressed and transmitted through a pipe to the piston or pistons of a hydraulic calliper associated to the brake disks fixed with respect to the wheels of the bicycle or motorcycle.

The pressure of the fluid hence brings about displacement of the piston of the calliper and approach of the friction elements applied thereto until they come into contact with the sides of the disk and exert a braking action on the wheel.

The stroke of the piston of the pump body, or main piston, is articulated in different steps, namely, a first, neutral, step, during which the cylinder communicates with the tank into which the volume of fluid displaced flows back whilst the pipes of the hydraulic circuit remain at low pressure (close to atmospheric pressure) without any substantial displacement of fluid between the pump body and the calliper, and a second, active, step, in which the piston sends into the braking circuit the fluid, which undergoes an increasing pressurization.

In this second step, the first stretch of displacement of the main piston brings about a stroke of approach of the pistons of the calliper and hence of the friction elements to the disk up to the position of contact.

From the moment when the friction elements contact the disk, to each further displacement of the main piston there corresponds an increasing compression of the disk between the pistons of the calliper and an increasing pressurization of the fluid.

The shorter of longer duration of the stroke of approach of the calliper pistons and the pressure exerted by these on the disk depends upon the hydraulic ratio existing between the pump body and the brake calliper, defined as the ratio between the amplitude of the strokes executed by the main pistons and the pistons of the calliper given the same volume of fluid displaced.

In the use of hydraulic brakes, above all in the sports sector, it is desirable to be able to reduce the step of approach of the calliper piston with respect to the displacement of the brake control lever in order to have a more immediate response and have available a greater amplitude of displacement of the lever in the useful step of actuation of the brake.

In addition, there is felt the need to be able to render progressive the braking action in the initial active step, i.e., from the moment when the friction elements contact the disk, in order to modulate the braking action as well as possible according to the circumstances and to increase the sensitivity and precision of control of the lever.

From EP0368120 is known a brake control valve with an hollow piston having a gasket sliding through a compression chamber. Into the hollow piston a further piston projecting from an end of the compression chamber can sealingly slide. In the functioning, the hollow piston is able to displace a greater amount of fluid at a first stage of its sliding stroke and a smaller amount at a second stage starting when the further piston enters the cavity of the hollow piston. This solution involves a relatively complex structure comprising two pistons and respective gaskets.

### Aim of the Invention

With the present invention, the aim is to overcome the drawbacks of the solutions already known and to propose a pump body having a geometry such that, given the same amplitude of sliding of the main piston in the cylinder, there is a variable hydraulic ratio, and in particular such that the volume of fluid that is displaced in the first part of the active step of braking is greater than the volume displaced in the second part of the same step in order to reduce the amplitude of the free stroke of approach of the friction elements to the disk.

### Summary of the invention

The above purpose has been achieved by providing a pump body according to the attached main claim.

The main advantage consists in the fact that the displacement required of the control lever for setting under way the active step of braking is reduced, and hence a faster response for the control is achieved.

Furthermore, in a preferred embodiment of the invention, the second part of the active step, where, that is, the friction elements are in contact with the disk, starts with a gradual reduction of the volume of fluid displaced given the same amplitude of sliding of the piston in the cylinder in order to render the initial action for compression of the calliper on the wheel disk progressive.

The main advantage of this solution is the fact that a progressiveness of the braking action and a greater sensitivity of control of the control lever is obtained.

According to a further advantageous aspect of the invention, the effect of variability of the hydraulic ratio is obtained by providing a piston with a hollow stem with variable cross section, for example having a tapered conical shape, which defines with the cylinder a compression chamber, the reduction of volume of which per unit displacement of the piston varies as the piston advances.

A first advantage of this embodiment is the simplicity of construction and the reliability of use.

Known from the document No. DE102006022551 is a pump body for hydraulic brakes provided with a piston with a tapered hollow stem.

However, in this known solution the tapered shape of the piston has the purpose of ensuring a free margin between the piston and the primary gasket to enable fast reflux of the fluid from the cylinder to the tank in the neutral step of the stroke of the piston and is hence unable to perform the technical function underlying the present invention. Furthermore, during the active step of the stroke of the main piston, the volume of fluid displaced is constant or increases per unit displacement of the piston, with the consequence of displacing a smaller volume of fluid at the start of braking, instead of bestowing the desired graduality thereon.

### List of Drawings

The above and further advantages will be better understood by any person skilled in the branch from the ensuing description and the annexed drawings, which are provided merely by way of non-limiting example and in which:
- Figure 1 shows a view from beneath of a pump body according to the invention;
- Figure 2 shows the lateral cross-sectional view according to the trace A-A of Figure 1;
- Figure 3 shows the detail B of Figure 2;
- Figure 4 shows the detail of the piston of the pump body of Figure 1-3;
- Figure 5 shows a second embodiment of a pump body according to the invention; and
- Figure 6 shows a detail of the pump body of Figure 5.

### Detailed Description

With reference to the drawings, a pump body 33 according to the invention is illustrated by way of non-limiting example of a preferred embodiment.

The pump body comprises a cylinder 1 and a piston 2 that is mobile inside it.

The piston is provided with a hollow cylindrical stem 3, which is able to slide in a primary gasket 4 mounted fixed with respect to the cylinder 1 and with an end head 16, mounted on which is a second gasket 11 that can slide in a fluid-tight way along the cylinder 1.

The stem 3 is connected via a thrust rod 19 to a control lever 15, which turns about a pin 20 fixed with respect to the cylinder 1.

The thrust rod 19 is articulated with respect to the stem 3 with a spherical joint 24 and is joined to the control lever 15 by means of a device 21 for adjusting the angular position of the lever about the pin 20.

The device 21 preferably comprises a knob 25 that can turn with the rod 19 to screw/unscrew it on/off an internally threaded bush 26, constrained in a rocking way with respect to the lever 15.

Rotation of the rod 19 brings about sliding of the bush 26 and hence of the rod 15, which is thus turned with respect to the pin 20.

In the configuration illustrated, the pump body further comprises a compensation tank 10 set coaxially with respect to the cylinder 1 and connected to the latter via holes 14 made in the wall of the cavity 13 of the stem.

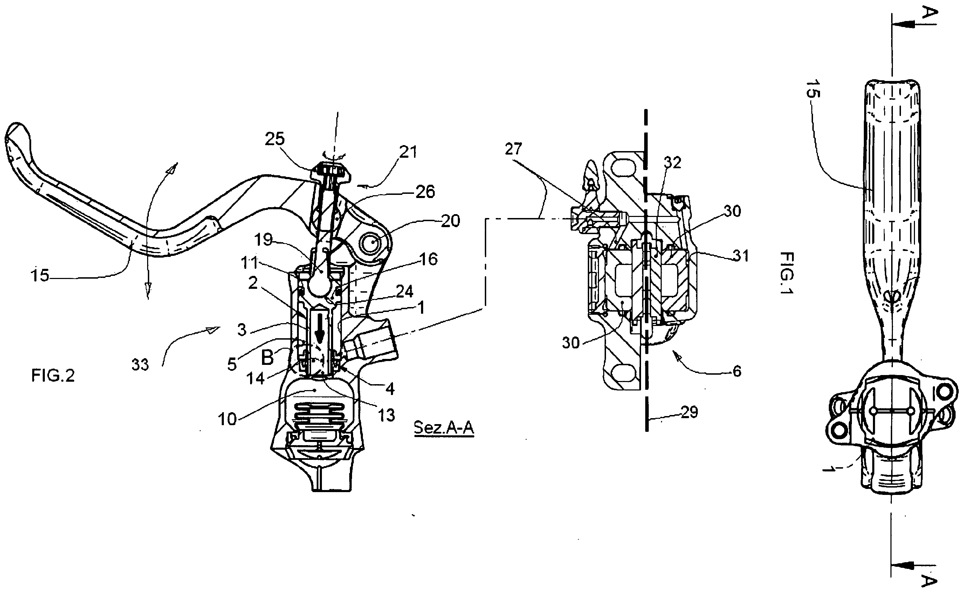

In this example of embodiment, opening of the passage of the fluid between the cylinder 1 and the tank 10 is determined by the position of the piston, or rather of the holes 14 with respect to the position of the seal lip 28 of the gasket 4 on the stem 3 so that there will be communication only if the holes 14 are located upstream of the gasket 4 according to the direction of advance of the piston (arrow pointing downwards in Figure 2).

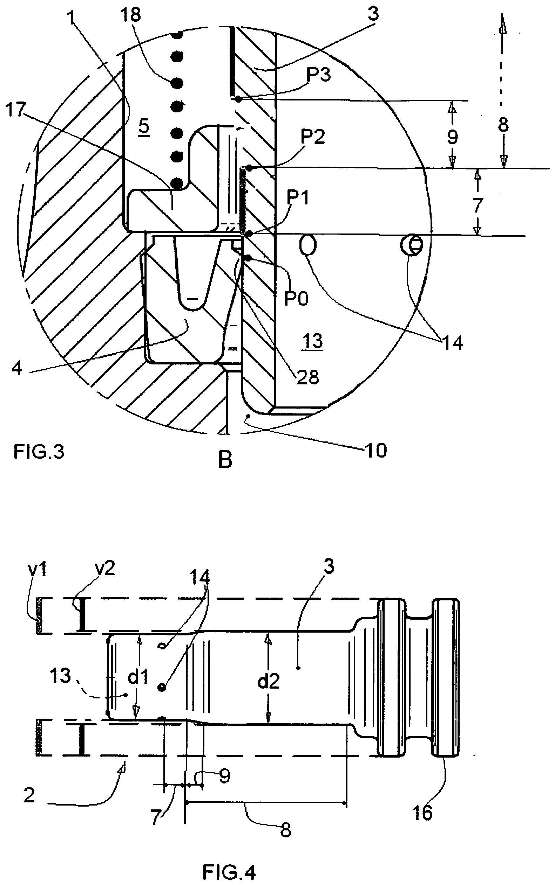

Illustrated in greater detail with reference to Figure 4 is the embodiment of the piston 2, which envisages a first cylindrical portion 7 of diameter d1 and a second cylindrical portion 8 of diameter d2 greater than d1. Preferably, the first portion 7 is radiused to the second portion 8 via a stretch 9 having a tapered shape, for example with a linear or curvilinear profile.

In various embodiments it will, however, be possible to envisage pistons with an external profile having a shape and dimensions defined according to the desired variation of hydraulic ratio, using, for example, conical profiles extending throughout the length of the piston.

In use, by turning the lever 15 in a counterclockwise direction, the rod 19 pushes the piston 2 to slide in a movement of downstroke against the action of a counteracting spring 18 compressed between a spring-guide element 17 housed in the cylinder 1 in the proximity of said primary gasket 4 and the end head 16. The displacement of the piston within the compression chamber 5 compresses the fluid present in the chamber 5, which is sent into the actuator 6 through the pipes 27.

Preferably, the actuator 6 is represented schematically in Figure 2 in the form of a calliper for disk brakes 29 with pistons 30 that are mobile in corresponding cylinders 31 with respect to the disk 29 between a detached position and an operative position, in which friction elements 32 applied to the pistons are in contact with the disk 29 and exert a braking action.

With reference to Figure 3, the position assumed by the piston 2 in the downstroke movement is indicated with respect to the point of seal of the lip 28 on the stem 3.

Designated by P0 is the initial position at rest. In this position, the piston is completely retracted, and the cylinder 1 communicates with the tank 10 by means of the holes 14 and the cavity 13.

Designated by P1 is the position of start of the active step of the stroke of the piston 2. In this position, the communication between the cylinder 1 and the tank 10 is interrupted by the gasket 4, and the chamber 5 is completely invaded with fluid. The displacement of the piston is consequently followed by a reduction of the volume of the compression chamber 5 and the displacement towards the actuator 6 of an amount of working fluid corresponding to the reduction of volume.

Designated by P2 is an intermediate position of the piston downstream of the position P1, in a position corresponding to the end of the portion 7 of the stem of smaller diameter d1. In this position, the movement of the piston has brought about a displacement of fluid corresponding to the reduction of volume of the chamber 5.

Represented by v1 in Figure 4 is the amplitude of the gap between the stem 3 and the cylinder 1, which determines the volume of fluid displaced by the piston during sliding of the portion 7 through the gasket 4.

According to the invention, the volume defined by v1 is such as to cause the pistons 30 of the calliper 6 to perform the movement of approach to the disk 29 during displacement of the piston 2 along the stretch 7.

Designated by P3 is a position of the piston downstream of the position P2, where the gasket 4 provides a seal on the portion 8 of larger diameter d2. In this position, the gasket has slid along the tapered stretch 9 and has progressively displaced an ever smaller volume of fluid, corresponding to the increasing diameter of the stem and hence to the smaller volume of the chamber 5 that is swept by the gasket 4.

As has been seen previously, at the start of the stretch 9 the pistons 30 have come into contact with the disk 29 and hence start the action of braking on the disk 29.

Advantageously, the gradual reduction of the volume of fluid displaced, given the same displacement of the piston and hence of the lever 15, brings about a progressive and gradual action of braking of the pistons 30 on the disk 29.

Downstream of the position P3, to each displacement of the piston there corresponds a displacement of volume of fluid corresponding to the constant diameter d2, i.e., to the value v2 of the gap between the piston 2 and the cylinder 1.

In the example described, the diameter d2 is constant and larger than the constant diameter d1, but it is understood that the diameters of the piston may even not be constant but continuously variable.

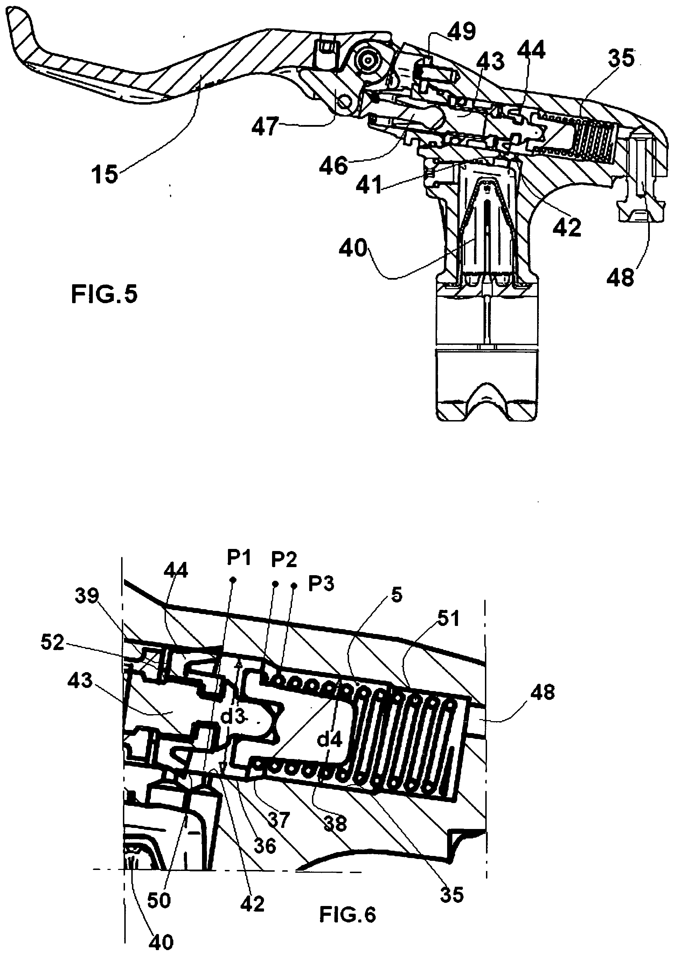

With reference to Figures 5 and 6, an embodiment of a pump body 34 according to the invention is illustrated, where a cylinder is provided with a pressure chamber 35 having a tapered shape with gradually varying cross section, communicating with a side tank 40 through communication holes 41, 42 and with a delivery hole 48 that is to supply a hydraulic actuator, for example a brake calliper 6.

Within the cylinder 35 there can slide, against the action of a spring 51, a piston 43 carrying a primary gasket 44 and actuated by a manoeuvring lever 15, connected to the piston via a stem 46 and possibly appropriate lever mechanisms 47.

Preferably, the pump body 34 further comprises means 49 for adjusting the longitudinal position at rest of the piston 43 within the cylinder 35 and the distance of the primary gasket 44 from the communication port 42, which determines the point of start of the active stroke of the piston, i.e., of the end of the free stroke and start of delivery of fluid under pressure in the circuit downstream of the cylinder 35.

In the example described, the means 49 comprise gears accessible from outside the pump body and connected to the piston 43 to bring about a rotation of the piston itself about its own axis and of the gasket 44 along with it.

Advantageously, the gasket 44 has a rim 50 of different height in the axial direction so that its rotation determines a different and adjustable distance of the rim 50 from the hole 42 and hence a greater or smaller rotation of the lever 15 and accordingly a greater or smaller longitudinal stroke of the piston 43 before the gasket 44 reaches the hole 42.

In greater detail, the cylinder 35 comprises a stretch 36 of diameter d3, an area 37 of reduction of the diameter, and a stretch 38 of diameter d4 smaller than d3.

In various embodiments, the surface of the cylinder in the area 37 may be of any shape, i.e., with a conical profile or with different curvatures, either convex or concave.

Preferably, the pump body 34 further comprises an elastic element 39, which is set supporting the primary gasket 4 when the cylinder is pressurized and is provided with a slit 52 that serves to adapt to the variation of the internal diameter of the cylinder as the gasket advances during actuation of the lever 15. Alternatively, the stretch of cylinder on which the gasket 4 is mounted can be of dimensions smaller than the value d4 so as not to interfere with it during operation.

In this embodiment, the internal area of the cylinder per unit axial length in the stretch of diameter d3 is greater than the area per unit axial length in the stretch of diameter d4, and consequently the amount of fluid displaced by the gasket 44 is smaller, as described with reference to the embodiment of Figure 4.

The invention achieves important advantages because it enables reduction of the amplitude of the displacement of the main piston (and hence of the control member, namely, in the example described, the lever 15 necessary for getting the pistons of the actuator to perform the free stroke prior to start of the braking action).

In addition, thanks to the tapered shape of the piston, the action of braking exerted by the pistons 30 on the disk 29 is rendered gradual, at least in the initial step.

The present invention has been described according to some preferred embodiments, but equivalent variants can be devised, without thereby departing from the sphere of protection of the invention.

## Claims

1. A pump body for governing hydraulic actuators (6) of disk brakes for bicycles or motorcycles, comprising:
a cylinder (1) with a chamber for compression of the fluid (5, 35), communicating with the hydraulic actuator (6); and
a piston assembly (2, 43), mobile with respect to the cylinder and provided with a stem (3) and a primary gasket (4, 44) providing a seal between said piston and said cylinder;
wherein a movement of downstroke of the piston (2, 43) determines a reduction of the volume of the compression chamber (5, 35) and the displacement towards the actuator (6) of a corresponding volume of working fluid (1), corresponding
and wherein, in said movement of downstroke, the piston (2) is mobile between a first position upstream (P1), a second, intermediate, position downstream (P2), and at least one third position downstream (P3),
said pump body being **characterized in that** said gasket (4,44) is arranged to slide on a surface having portions of different diameters in correspondence of said positions (P1; P2; P3) of the piston, and by the fact that given the same extent of the movement of the piston (2) the reduction in volume of the compression chamber (5) is greater upstream of the position (P2) with respect to the volume displaced downstream of said position (P2).

2. The pump body according to Claim 1, wherein the reduction of the volume of the compression chamber (5) given the same extent of the movement of the piston (2), decreases gradually between said first position (P2) and said third position (P3).

3. The pump body according to Claim 2, wherein said primary gasket (4) is mounted fixed on the cylinder (1), and the stem (3) of the piston (2) slides in a constantly fluid-tight way in the gasket (4), and wherein the stem (3) has a first portion (7) which slides in a fluid-tight way in the gasket (4) throughout the displacement of the piston upstream of said second position (P2), and a second portion (8) which slides in a fluid-tight way in the gasket (4) throughout the displacement of the piston downstream of said second position (P2), the first portion (7) having an external diameter (d1) smaller than the external diameter (d2) of said second portion (8).

4. The pump body according to Claim 3, wherein said second portion (8) comprises a stretch (9) having a tapered shape radiused with said portion (7).

5. The pump body according to Claim 4, **characterized in that** said stem (3) has a hollow cylindrical portion (13) provided with one or more holes (14) and **in that** it comprises a tank (10) set coaxially to the cylinder (1) and communicating therewith through said holes (14) provided in positions of the piston (2) upstream of said first position (P1).

6. The pump body according to any one of Claims 3-5, **characterized in that** it comprises a secondary gasket (11), which is mounted on an end head (16) of the stem (3) and is able to slide in a fluid-tight way along the cylinder (1) and further comprises a spring-guide element (17) housed fixed in the cylinder (1) in the proximity of said primary gasket (4) for housing a thrust spring (18) comprised between said spring-guide (17) and said end head (16).

7. The pump body according to any one of Claims 4-6, **characterized in that** said tapered stretch (9) has a rectilinear external profile.

8. The pump body according to any one of Claims 4-6 **characterized in that** said tapered stretch (9) has a curvilinear external profile.

9. The pump body according to any one of the preceding claims, **characterized in that** it comprises a control lever (15) connected to the stem (3) via a thrust rod (19) and rotating about a pin (20), which is fixed with respect to the cylinder (1), said thrust rod (19) being joined to the stem (3) by means of a spherical joint (24) and to the control lever (15) by means of a device (21) for adjusting the angular position of the lever with respect to the cylinder (1).

10. The pump body according to Claim 1 or Claim 2, wherein the cylinder (1) has a pressure chamber (35) communicating with a lateral tank (40) via at least one lateral communication hole (42), a piston (43) carrying a primary gasket (44) being able to slide within the cylinder.

11. The pump body according to Claim 10, wherein the chamber of the cylinder (35) comprises a stretch (36) of a third diameter (d3), a stretch (37) with decreasing diameter, and a stretch (38) of a fourth diameter (d4) smaller than the third diameter (d3).

12. A brake for bicycles or motorcycles, comprising a pump body (33) hydraulically connected to a hydraulic calliper (6) via ducts (27), wherein the pump body (33) comprises a main piston (2) having a primary gasket (4, 44), which piston is able to slide with respect to a cylinder (1) with a movement of downstroke to displace an amount of fluid towards said calliper (6), wherein, in said movement of downstroke, the piston (2) is mobile between a first position upstream (P1), a second, intermediate, position downstream (P2), and at least one third position dowmstream (P3), and said calliper (6) comprises one or more pistons governed (30) so that they can slide along respective cylinders (31) that are to receive said amount of fluid, wherein gasket (4,44) is arranged to slide on a surface having portions of different diameters in correspondence of said positions (P1; P2; P3) of the piston, the hydraulic ratio between said pump body (1) and said calliper (6) decreasesing as the movement of downstroke of the main piston (2) progresses.

## Patentansprüche

1. Pumpenkörper zum Regeln hydraulischer Stellelemente (6) von Scheibenbremsen für Fahrräder oder Motorräder, umfassend:
einen Zylinder (1) mit einer Kammer zur Kompression des Fluids (5, 35), das mit dem hydraulischen Stellelement (6) in Verbindung steht; und
eine Kolbenanordnung (2, 43), die bezüglich des Zylinders bewegbar ist und mit einem Schaft (3) und einer Primärdichtung (4, 44), die eine Abdichtung zwischen dem Kolben und dem Zylinder bewirkt, versehen ist;
wobei eine abwärtsgehende Hubbewegung des Kolbens (2, 43) eine Verringerung des Volumens der Druckkammer (5, 35) und die Verschiebung zu dem Stellelement (6) hin eines entsprechenden Volumens von Arbeitsfluid (1) entsprechend bestimmt,
und wobei in der abwärtsgehenden Hubbewegung der Kolben (2) bewegbar ist zwischen einer ersten Position stromaufwärts (P1), einer zweiten, dazwischenliegenden Position stromabwärts (P2) und mindestens einer dritten Position stromabwärts (P3),
wobei der Pumpenkörper **dadurch gekennzeichnet ist, dass** die Dichtung (4, 44) angeordnet ist, so dass sie auf einer Oberfläche mit Abschnitten unterschiedlicher Durchmesser in Übereinstimmung der Positionen (P1; P2; P3) des Kolbens gleitet, und durch die Tatsache, dass, die gleiche Strecke der Bewegung des Kolbens (2) vorausgesetzt, die Verringerung des Volumens des Druckkammer (5) stromaufwärts der Position (P2) größer ist bezüglich des Volumens, das stromabwärts der Position (P2) verdrängt wird.

2. Pumpenkörper nach Anspruch 1, wobei die Verringerung des Volumens der Druckkammer (5), die gleiche Strecke der Bewegung des Kolbens (2) vorausgesetzt, stufenweise abnimmt zwischen der ersten Position (P2) und der dritten Position (P3).

3. Pumpenkörper nach Anspruch 2, wobei die Primärdichtung (4) fest an dem Zylinder (1) angebracht ist und der Schaft (3) des Kolbens (2) gleichbleibend fluiddicht in der Dichtung (4) gleitet, und wobei der Schaft (3) einen ersten Abschnitt (7), der fluiddicht in der Dichtung (4) während der Verschiebung des Kolbens stromaufwärts der zweiten Position (P2) gleitet, und einen zweiten Abschnitt (8), der fluiddicht in der Dichtung (4) während der Verschiebung des Kolbens stromabwärts der zweiten Position (P2) gleitet, aufweist, wobei der erste Abschnitt (7) einen Außendurchmesser (d1) besitzt, der kleiner ist als der Außendurchmesser (d2) des zweiten Abschnitts (8).

4. Pumpenkörper nach Anspruch 3, wobei der zweite Abschnitt (8) eine Ausdehnung (9) einschließt, die eine mit dem Abschnitt (7) gerundete, abgeschrägte Form aufweist.

5. Pumpenkörper nach Anspruch 4, **dadurch gekennzeichnet, dass** der Schaft (3) einen hohlen zylindrischen Abschnitt (13) aufweist, der mit einem oder mehreren Löchern (14) versehen ist, und dadurch, dass er einen Behälter (10) einschließt, der koaxial zu dem Zylinder (1) angeordnet ist und mit diesem durch die Löcher (14) in Verbindung steht, die in Positionen des Kolbens (2) stromaufwärts der ersten Position (P1) vorgesehen sind.

6. Pumpenkörper nach einem der Ansprüche 3 bis 5, **dadurch gekennzeichnet, dass** er eine Sekundärdichtung (11) einschließt, die an einem oberen Ende (16) des Schaftes (3) angeordnet ist und fluiddicht längs des Zylinders (1) gleiten kann und des Weiteren ein Federführungselement (17) umfasst, das in dem Zylinder (1) in der Nähe der Primärdichtung (4) unbeweglich aufgenommen ist, zur Aufnahme einer Druckfeder (18), die zwischen der Federführung (17) und dem oberen Ende (16) eingeschlossen ist.

7. Pumpenkörper nach einem der Ansprüche 4 bis 6, **dadurch gekennzeichnet, dass** die abgeschrägte Ausdehnung (9) ein geradliniges äußeres Profil aufweist.

8. Pumpenkörper nach einem der Ansprüche 4 bis 6, **dadurch gekennzeichnet, dass** die abgeschrägte Ausdehnung (9) ein krummlinig begrenztes äußeres Profil aufweist.

9. Pumpenkörper nach einem der vorhergehenden Ansprüche, **dadurch gekennzeichnet, dass** er einen Steuerhebel (15) umfasst, der über eine Schubstange (19) mit dem Schaft (13) verbunden ist und um einen Stift (20) rotiert, der bezüglich des Zylinders (1) festgelegt ist, wobei die Schubstange (19) mit dem Schaft (3) durch ein Kugelgelenk (24) und mit dem Steuerhebel (15) durch eine Vorrichtung (21 zum Einstellen der Winkelposition des Hebels bezüglich des Zylinders (1) verbunden ist.

10. Pumpenkörper nach Anspruch 1 oder Anspruch 2, wobei der Zylinder (1) eine Druckkammer (35) aufweist, die mit einem seitlichen Behälter (40) über mindestens ein seitliches Verbindungsloch (42) in Verbindung steht, einen Kolben (43), der eine Primärdichtung (44) trägt, die innerhalb des Zylinders gleiten kann.

11. Pumpenkörper nach Anspruch 10, wobei die Kammer ist Zylinders (35) eine Ausdehnung (36) mit einem dritten Durchmesser (d3), eine Ausdehnung (37) mit abnehmendem Durchmesser und eine Ausdehnung (38) mit einem vierten Durchmesser (d4) aufweist, der kleiner ist als der dritte Durchmesser (d3).

12. Bremse für Fahrräder oder Motorräder, umfassend einen Pumpenkörper (33), der hydraulisch mit einem hydraulischen Taster (6) über Kanäle (27) verbunden ist, wobei der Pumpenkörper (33) einen Hauptkolben (2) mit einer Primärdichtung (4, 44) einschließt, wobei der Kolben bezüglich eines Zylinders (1) mit einer abwärtsgehenden Hubbewegung gleiten kann, um eine Fluidmenge zu dem Taster (6) hin zu verdrängen, wobei der Kolben (2) bei dieser abwärtsgehenden Hubbewegung zwischen einer ersten Position stromaufwärts (P1), einer zweiten, dazwischenliegenden Position stromabwärts (P2) und mindestens einer dritten Position stromabwärts (P3) bewegbar ist,
und der Taster (6) einen oder mehrere Kolben umfasst, die so geregelt (30) werden, dass sie längs jeweiliger Zylinder (31) gleiten können, die die Fluidmenge aufnehmen sollen, wobei die Dichtung (4, 44) angeordnet ist, um auf einer Oberfläche zu gleiten, die Abschnitte unterschiedlicher Durchmesser entsprechend den Positionen (P1; P2; P3) des Kolbens besitzen, wobei das hydraulische Verhältnis zwischen dem Pumpenkörper (1) und dem Taster (6) abnimmt, wenn die abwärtsgehende Hubbewegung des Hauptkolbens (2) fortschreitet.

## Revendications

1. Corps de pompe pour commander des actionneurs hydrauliques (6) de freins à disque pour bicyclettes ou motocycles, comprenant :
un cylindre (1) avec une chambre pour la compression du fluide (5, 35), communiquant avec l'actionneur hydraulique (6) ; et
un ensemble de piston (2, 43), mobile par rapport au cylindre et muni d'une tige (3) et d'un joint d'étanchéité principal (4, 44) fournissant une étanchéité entre ledit piston et ledit cylindre ;
dans lequel un mouvement de course descendante du piston (2, 43) entraîne une réduction du volume de la chambre de compression (5, 35) et le déplacement correspondant vers l'actionneur (6) d'un volume correspondant de fluide de travail (1),
et dans lequel, dans ledit mouvement de course descendante, le piston (2) est mobile entre une première position en amont (P1), une deuxième position intermédiaire en aval (P2), et au moins une troisième position en aval (P3),
ledit corps de pompe étant **caractérisé en ce que** ledit joint d'étanchéité (44) est agencé pour coulisser sur une surface ayant des portions de diamètres différents en correspondance desdites positions (P1 ; P2 ; P3) du piston, et **en ce que**, pour la même étendue du mouvement du piston (2), la réduction de volume de la chambre de compression (5) est supérieure en amont de la position (P2) par rapport au volume déplacé en aval de ladite position (P2).

2. Corps de pompe selon la revendication 1, dans lequel la réduction du volume de la chambre de compression (5), pour la même étendue du mouvement du piston (2), diminue progressivement entre ladite première position (P2) et ladite troisième position (P3).

3. Corps de pompe selon la revendication 2, dans lequel ledit joint d'étanchéité principal (4) est monté fixe sur le cylindre (1), et la tige (3) du piston (2) coulisse d'une manière constamment étanche au fluide dans le joint d'étanchéité (4), et dans lequel la tige (3) a une première portion (7) qui coulisse d'une manière étanche au fluide dans le joint d'étanchéité (4) sur tout le déplacement du piston en amont de ladite deuxième position (P2), et une deuxième portion (8) qui coulisse d'une manière étanche au fluide dans le joint d'étanchéité (4) sur tout le déplacement du piston en aval de ladite deuxième position (P2), la première portion (7) ayant un diamètre externe (d1) inférieur au diamètre externe (d2) de ladite deuxième portion (8).

4. Corps de pompe selon la revendication 3, dans lequel ladite deuxième portion (8) comprend un tronçon (9) ayant une forme conique arrondie avec ladite portion (7).

5. Corps de pompe selon la revendication 4, **caractérisé en ce que** ladite tige (3) a une portion cylindrique creuse (13) munie d'un ou plusieurs trous (14) et **en ce qu'**il comprend un réservoir (10) monté de manière coaxiale sur le cylindre (1) et communiquant avec celui-ci à travers lesdits trous (14) disposés dans des positions du piston (2) en amont de ladite première position (P1).

6. Corps de pompe selon l'une quelconque des revendications 3 à 5, **caractérisé en ce qu'**il comprend un joint d'étanchéité auxiliaire (11), qui est monté sur une tête d'extrémité (16) de la tige (3) et est adapté pour coulisser d'une manière étanche au fluide le long du cylindre (1) et comprend en outre un élément de guidage à ressort (17) logé fixe dans le cylindre (1) à proximité dudit joint d'étanchéité principal (4) pour loger un ressort de poussée (18) compris entre ledit guide à ressort (17) et ladite tête d'extrémité (16).

7. Corps de pompe selon l'une quelconque des revendications 4 à 6, **caractérisé en ce que** ledit tronçon conique (9) a un profil externe rectiligne.

8. Corps de pompe selon l'une quelconque des revendications 4 à 6, **caractérisé en ce que** ledit tronçon conique (9) a un profil externe curviligne.

9. Corps de pompe selon l'une quelconque des revendications précédentes, **caractérisé en ce qu'**il comprend un levier de commande (15) connecté à la tige (3) par le biais d'une tige de poussée (19) et tournant autour d'un axe (20), qui est fixe par rapport au cylindre (1), ladite tige de poussée (19) étant unie à la tige (3) au moyen d'un joint sphérique (24) et au levier de commande (15) au moyen d'un dispositif (21) pour régler la position angulaire du levier par rapport au cylindre (1).

10. Corps de pompe selon la revendication 1 ou la revendication 2, dans lequel le cylindre (1) a une chambre de pression (35) communiquant avec un réservoir latéral (40) par le biais d'au moins un trou latéral de communication (42), un piston (43) portant un joint d'étanchéité principal (44) étant adapté pour coulisser dans le cylindre.

11. Corps de pompe selon la revendication 10, dans lequel la chambre du cylindre (35) comprend un tronçon (36) d'un troisième diamètre (d3), un tronçon (37) avec un diamètre décroissant, et un tronçon (38) d'un quatrième diamètre (d4) inférieur au troisième diamètre (d3).

12. Frein pour bicyclettes ou motocycles, comprenant un corps de pompe (33) connecté hydrauliquement à un étrier hydraulique (6) par le biais de conduits (27), dans lequel le corps de pompe (33) comprend un piston principal (2) ayant un joint d'étanchéité principal (4, 44), lequel piston est adapté pour coulisser par rapport à un cylindre (1) avec un mouvement de course descendante pour déplacer une quantité de fluide vers ledit étrier (6), dans lequel, dans ledit mouvement de course descendante, le piston (2) est mobile entre une première position en amont (P1), une deuxième position intermédiaire en aval (P2), et au moins une troisième position en aval (P3),
et ledit étrier (6) comprend un ou plusieurs pistons commandés (30) de manière qu'ils puissent coulisser le long de cylindres respectifs (31) qui sont destinés à recevoir ladite quantité de fluide, dans lequel un joint d'étanchéité (4, 44) est agencé pour coulisser sur une surface ayant des portions de diamètres différents en correspondance desdites positions (P1 ; P2 ; P3) du piston, le rapport hydraulique entre ledit corps de pompe (1) et ledit étrier (6) diminuant alors que le mouvement de course descendante du piston principal (2) progresse.
